Europäisches Patentamt

European Patent Office

Office européen des brevets

(11) Veröffentlichungsnummer: **0 252 312**
A2

## (12) EUROPÄISCHE PATENTANMELDUNG

(21) Anmeldenummer: 87108243.4

(22) Anmeldetag: 06.06.87

(51) Int. Cl.4: **B23Q 11/10**

(30) Priorität: 11.07.86 DE 3623420

(43) Veröffentlichungstag der Anmeldung:
13.01.88 Patentblatt 88/02

(84) Benannte Vertragsstaaten:
AT BE CH FR GB IT LI NL SE

(71) Anmelder: MESSER GRIESHEIM GMBH
Hanauer Landstrasse 330
D-6000 Frankfurt/Main 1(DE)

(72) Erfinder: Volker, Wolfgang
Pastorsbusch 35
D-4154 Tönisvorst 1(DE)

(54) Vorrichtung für die Zufuhr eines kryogenen Kältemittels an die Bearbeitungszone eines Roboters.

(57) Wenn Roboter mit Werkzeugen für hohe Bearbeitungsgeschwindigkeiten, insbesondere für spanabhebende Bearbeitungen, bestückt werden, kann die Bearbeitungsgeschwindigkeit durch intensive Kühlung der Bearbeitungszone mit einem kryogenen Kühlmittel wie flüssigem Stickstoff erhöht werden. Der Schlauch (10) zur Zufuhr des Kühlmittels kann nicht optimal isoliert werden, da er zu unflexibel würde. Es besteht die Gefahr, daß im Schlauch Kühlmittel verdampft und die Gasblasen die Kühlmittelzufuhr behindern.

Dies wird verhindert, indem oberhalb der Bearbeitungszone ein Phasenabscheider (6) angeordnet ist, dessen Ausgang für die Flüssigphase an einen Koaxialschlauch angeschlossen ist, durch den das Kühlmittel an die Bearbeitungszone gelangt. Sowohl der Innenschlauch (16) als auch des Ringraums zwischen Innenschlauch und äußerem Schlauch (17) sind mit Kühlmittel beaufschlagt.

FIG. 2

EP 0 252 312 A2

# Vorrichtung für die Zufuhr eines kryogenen Kältemittels an die Bearbeitungszone eines Roboters

Die Erfindung betrifft eine Vorrichtung für die Zufuhr eines kryogenen Kältemittels an die Bearbeitungszone eines Roboters nach dem Oberbegriff des Anspruches 1.

Roboter sind schnelle Handhabungsautomaten, die mit unterschiedlichen Werkzeugen bestückt werden können. Der wesentliche Vorteil dieser Fertigungseinrichtung ist ihre hohe Flexibilität. Diese wird aber nur dann erreicht, wenn Werkzeuge eingesetzt werden können, die eine hohe Bearbeitungsgeschwindigkeit garantieren. Andernfalls ist eine Bearbeitungsstation, die mit Robotern bestückt wurde, gegenüber einer konventionellen Lösung zu langsam oder, wenn die Bearbeitung von mehreren Robotern gleichzeitig vorgenommen wird, wirtschaftlich nicht rentabel. Der Trend geht daher zu sehr schnellen Handhabungsautomaten mit entsprechend schnellen Werkzeugen. Dies stellt an die Werkzeuge hohe Anforderungen bezüglich Standzeit und thermische Belastbarkeit. Zur Veranschaulichung soll ein Beispiel dienen: Zum Verputzen eines Kraftfahrzeug-Kühlergrilles, also eines sehr komplex aufgebauten Formteiles, könnte ein teures Stanzwerkzeug oder ein preiswerter Handhabungsautomat eingesetzt werden. Wegen der langsamen Arbeitsgeschwindigkeit des Handhabungsautomaten ist diese Lösung jedoch unwirtschaftlich. Da andererseits auch die Amortisationszeit für das teure Stanzwerkzeug zu lang ist, werden derartige Teile in aufwendiger Handarbeit entgratet.

Die Arbeitsgeschwindigkeit des Roboters kann erhöht werden, wenn die zu bearbeitende Stelle gekühlt wird. Insbesondere gilt dies für Einrichtungen zum Schleifen, Fräsen, Bohren und Polieren. Eine schnelle und intensive Kühlung läßt sich mit kryogenen Kältemitteln, beispielsweise mit flüssigem Stickstoff, erreichen. Aufgrund der endlichen Wärmeleitfähigkeiten der zu bearbeitenden Materialien ist eine Vorlaufzeit für die Kühlung der zu bearbeitenden Stelle anzustreben. Bei einer gleichzeitigen Kühlung und Bearbeitung ließe sich die Bearbeitungsgeschwindigkeit nicht auf das an sich mögliche Maximum steigern. Zwischen der Eindringtiefe der Kältefront, der Vorschubgeschwindigkeit des Werkzeuges und dem Abstand zwischen Kühlzone und Bearbeitungszone bestehen eindeutige Beziehungen, die durch Versuche ermittelt werden können. Für den optimalen Einsatz eines Roboters, dessen Bearbeitungszone mit einem kryogenen Kältemittel gekühlt werden soll, ist daher eine exakte Dosierung und verzögerungsfreie Beaufschlagung mit dem Kältemittel eine zwingende Voraussetzung. Außerdem muß das Kältemittel möglichst verlustfrei zu dem sich ständig bewegenden Robotergelenk geführt werden.

Der an sich erstrebenswerten Verwendung eines kryogenen Kältemittels, insbesondere flüssigen Stickstoffs, stehen jedoch erhebliche praktische Schwierigkeiten entgegen. Soll es nicht zu unerwünschten Gasschlägen in der Zufuhrleitung zum Bearbeitungspunkt des Roboterarmes kommen, muß die flexible Leitung gut isoliert werden. Eine wirksame Isolierung, z.B. ein doppelwandiger Wellrohrschlauch mit Mehrschichten-Vakuumisolation oder ein mit mineralischen Stoffen isolierter Schlauch wäre aber so unflexibel, daß er entweder überhaupt nicht oder mit nicht ausreichenden Standzeiten an einem Roboter eingesetzt werden könnte. Die Forderungen nach optimaler Isolation und hoher Beweglichkeit sowie großer Standfestigkeit stehen also in einem Widerspruch zueinander.

Der Erfindung liegt daher die Aufgabe zugrunde, eine Vorrichtung für die Zufuhr eines kryogenen Kältemittels an die Bearbeitungszone eines Roboters zu schaffen, die einerseits aufgrund ihrer Isolation das Entstehen von Gasschlägen in der Zufuhrleitung mit Sicherheit ausschließt, andererseits so flexibel ist, daß hohe Standzeiten erwartet werden können.

Ausgehend von dem im Oberbegriff des Anspruches 1 berücksichtigten Stand der Technik ist diese Aufgabe erfindungsgemäß gelöst mit den im kennzeichnenden Teil des Anspruches 1 angegebenen Merkmalen.

Eine vorteilhafte Weiterbildung der Erfindung ist im Unteranspruch angegeben.

Das Entstehen von Gasblasen und damit Gasschlägen in der Zufuhrleitung zur Bearbeitungsstelle wird im wesentlichen dadurch vermieden, daß der Phasenabscheider oberhalb des Roboters angeordnet wird und der Schlauch für die Zufuhr des kryogenen Kältemittels vertikal oder schräg nach unten zur Bearbeitungszone verläuft. Während die Flüssigkeit im Phasenabscheider sich in der Regel im Siedezustand befindet, also bei Wärmezufuhr teilweise verdampft, steht die Flüssigkeit im Schlauch unter einem gemäß der hydrostatischen Höhe größeren Druck. Diese Flüssigkeit ist demnach unterkühlt und kann Wärme aufnehmen, ohne sogleich zu verdampfen. Bei einer hochwertigen Isolation würde dies an sich genügen, um im Normalbetrieb das Entstehen von Gasblasen zu verhindern. Wegen der gewünschten Flexibilität wird der Schlauch dagegen nur gerade ausreichend isoliert. Ein gewisser Wärmeeinfall in den Schlauch wird in Kauf genommen. Da der Schlauch jedoch erfindungsgemäß als Koaxialschlauch ausgebildet ist, bei dem sowohl der Innenschlauch als auch der Ringraum mit Flüssigkeit gefüllt sind, verursacht die einfallende Wärme nur Gasblasen im Ringraum, aus der keine Flüssigkeit zur Bearbeitunsstelle geführt wird. Hier können die Gasblasen also gefahrlos in den Phasentrenner aufsteigen. Da der innere Schlauch auch geringfügig isolierend wirkt, bleibt die Flüssigkeit im Innenschlauch unterkühlt und das Kältemittel kann exakt über die Düsenöffnung und den Vordruck dosiert werden. Wesentlich ist daher, den inneren Schlauch so zu bemessen, daß gerade genügend flüssiges Kältemittel zum Ventil abströmen kann. Außerdem muß die Wandung des Innenschlauches so stark gewählt werden, daß der Innenraum und der Ringraum ausreichend voneinander isoliert sind.

Bei der erfindungsgemäßen Vorrichtung wird daher ein gewisser Wärmestrom in den Schlauch von vornherein in Kauf genommen. Die Isolierung kann infolgedessen so einfach gewählt werden, daß der Schlauch einerseits genügend flexibel bleibt, andererseits die äußere Oberfläche des Schlauches nicht unterkühlt werden kann.

Ein Ausführungsbeispiel der Erfindung soll anhand der beigefügten Zeichnungen erläutert werden.

Es zeigen:

    Fig.1 eine Gesamteinrichtung mit Kältemittelversorgung, Phasenabscheider, Roboter und Prozeßleitrechner,

    Fig.2 Phasenabscheider und Schlauchleitung im Detail.

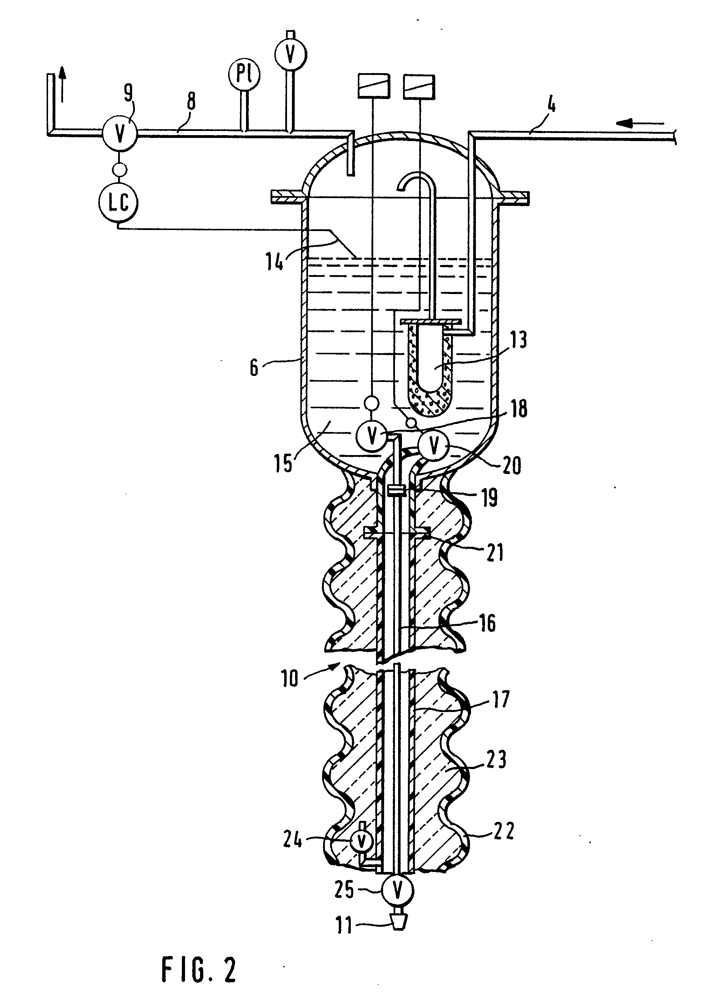

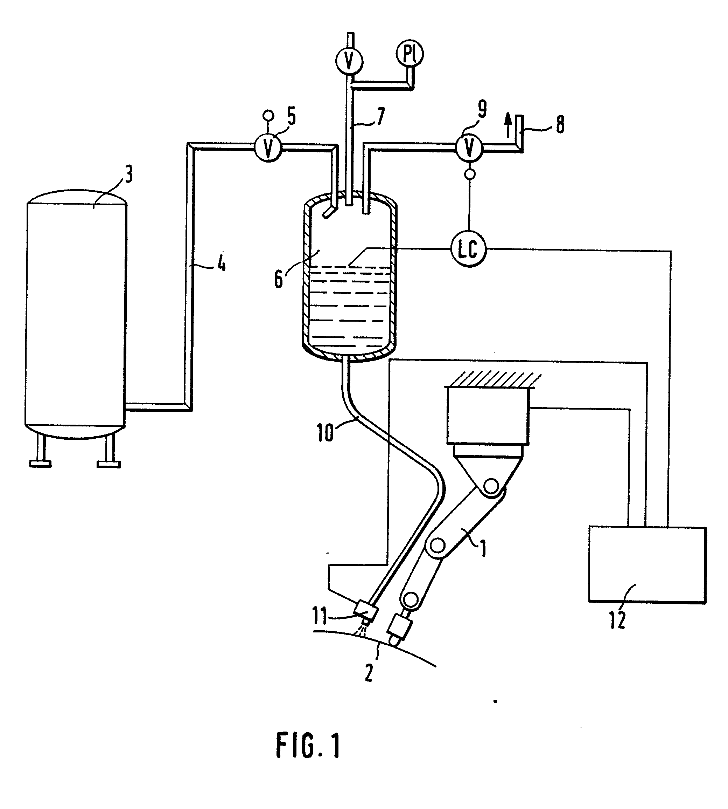

Die in Fig.1 dargestellte Einrichtung zeigt einen Roboter 1, dessen Bearbeitungszone 2 mit flüssigem Stickstoff als Kältemittel gekühlt wird. Der flüssige Stickstoff wird aus dem Tank 3 abgezogen und durch die Leitung 4 und das Ventil 5 in den Phasenabscheider 6 geleitet. Der Phasenabscheider 6 besitzt eine Sicherheitseinrichtung 7. Im Phasenabscheider 6 wird das überflüssige Gas abgetrennt und durch die Leitung 8 und das Ventil 9 abgezogen. Die flüssige Phase gelangt durch den Schlauch 10 und die Düse 11 an die Bearbeitungszone 2. Die Stickstoffzufuhr in den Phasenabscheider 6 und an die Bearbeitungszone 2 wird durch den Prozeßleitrechner 12 gesteuert, was durch gestrichelt dargestellte, nicht numerierte Leitungen angedeutet ist.

Fig.2 zeigt den Phasenabscheider 6 und den Schlauch 10 im Detail. Der flüssige Stickstoff in Leitung 4 gelangt durch ein Feinstfilter 13 in den Phasenabscheider 6. Die Höhe des flüssigen Stickstoffs 15 im Phasenabscheider 6 wird durch die Niveausteuerung 14 bestimmt.

Erfindungsgemäß ist der Schlauch 10 als Koaxialschlauch ausgebildet, bei dem sowohl der Innenschlauch 16 als auch der zwischen Innenschlauch 16 und äußerem Schlauch 17 gebildete Ringraum mit dem flüssigen Stickstoff 15 im Phasenabscheider 6 in Verbindung stehen. Der zur Kühlung bestimmte Stickstoff gelangt durch das Ventil 18, die Kupplung 19 und den Innenschlauch 16 zur Düse 11. In dem Zwischenraum zwischen Innenschlauch 16 und äußerem Schlauch 17 gelangt flüssiger Stickstoff durch das Ventil 20 und füllt den gesamten Ringraum auf. Die Ventile 18 und 20 sind im Normalbetrieb geöffnet. Im Ringraum entstehende Gasblasen können daher nach oben aufsteigen, sich im Phasenabscheider 6 sammeln und von dort abgezogen werden. Die Ventile 18 und 20 ermöglichen es jedoch, zusammen mit den Kupplungen 19 und 21, den Schlauch 10 bei gefülltem Phasenabscheider auszutauschen.

Der äußere Schlauch 17 ist von einem Schutzschlauch 22 und einer Isolation 23 umgeben. Der Schutzschlauch 6 dient nur dem nahezu gasdichten Abschluß des Systems und dem mechanischen Schutz der Isolierung 23. ·Lediglich eine geringe Leckage wird konstruktionsbedingt zugelassen. Eine Kältebeständigkeit ist dagegen nicht erforderlich. Konstruktionsbedingt ist der Wärmestrom durch die Isolation 23 so groß, daß es nicht zu einer Unterkühlung der äußeren Oberfläche des äußeren Schlauches 17 kommen kann, welche zur Kondensation von Luft führen würde. Aus Sicherheitsgründen wird dennoch die Isolation 23 durch ein als Ventil 24 ausgebildetes Leck mit Stickstoff gespült.

Die Zufuhr des flüssigen Stickstoffs zur Düse 11 erfolgt durch das Ventil 25. Dieses muß hohen mechanischen Belastungen standhalten. Um sofort nach Freigabe des Ventilsitzes flüssigen Stickstoff durchzulassen, muß das Ventil 25 so am Innenschlauch 16 angebaut sein, daß der flüssige Stickstoff bis vor dem Ventilsitz ansteht. Die Düse 11 muß eine große thermische Masse besitzen, damit in den kurzen Pausenzeiten sich die Bohrung der Düse nicht erwärmen kann, was zu Gasschlägen innerhalb der Düsenbohrung führen könnte.

Bei dem in den Figuren 1 und 2 dargestellten Ausführungsbeispiel besteht der Innenschlauch 16 aus Polyamid und hat Durchmesser von 6 und 4 mm. Der äußere Schlauch 17 ist ein gewickelter Polyamidschlauch aus Gewebe mit Edelstahlfedereinlage. Dieser Schlauch ist hochflexibel, druckfest und flüssigkeitsdicht. Der innere Durchmesser des äußeren Schlauches 17 beträgt 10 bis 12 mm. Für die Isolation 23 werden koaxial ineinandergesteckte Schläuche aus Polyesterfilz verwendet. Der Schutzschlauch 22 ist ein hochflexibler Polyäthylen-Wellrohrschlauch. Er dient lediglich dem gasdichten Abschluß des Systems und dem mechanischen Schutz der Isolation 23. Generell sind sämtliche kältefesten Schlauchwerkstoffe geeignet, insbesondere PTFE, PE, PP, PA und Aramid.

## Ansprüche

1. Vorrichtung für die Zufuhr eines kryogenen Kältemittels an die Bearbeitungszone (2) eines Roboters (1) mit einem Phasenabscheider (6) und einem zwischen Phasenabscheider und Bearbeitungszone angeordneten isolierten flexiblen Schlauch (10),
dadurch gekennzeichnet,
daß der Phasenabscheider oberhalb der Bearbeitungszone angebracht ist, der Schlauch in jeder Bearbeitungsposition zwischen Phasenabscheider und Bearbeitungszone vertikal oder schräg nach unten verläuft und der Schlauch als Koaxialschlauch ausgebildet ist, bei dem der Innenschlauch (16) und der von äußerem Schlauch (17) und Innenschlauch gebildete Ringraum an den Ausgang des Phasenabscheiders für die Flüssigphase angeschlossen sind.

2. Vorrichtung nach Anspruch 1,
dadurch gekennzeichnet,
daß der Innenschlauch aus Polyamid besteht und der äußere Schlauch als gewickelter Polyamidschlauch aus Gewebe mit Edelstahlfedereinlage ausgebildet ist.

FIG. 2

0 252 312

FIG. 1